# FASCICULE DE BREVET EUROPEEN

(11) **EP 2 582 540 B1**
(45) Date de publication et mention de la délivrance du brevet: **26.03.2014**
(21) Numéro de dépôt: 11720786.0
(22) Date de dépôt: 23.05.2011
(51) Int. Cl.: B60K 35/00, B60K 37/02, G02B 5/02, G02B 26/10, G02B 27/01

(54) **COMBINE D'INSTRUMENTS POUR VEHICULE AUTOMOBILE**
INSTRUMENTENCLUSTER FÜR EIN KRAFTFAHRZEUG
INSTRUMENT CLUSTER FOR A MOTOR VEHICLE

(30) Priorité: 15.06.2010 FR 1054719
(43) Date de publication de la demande: 24.04.2013
(73) Titulaire: Delphi Technologies, Inc., Troy, MI 48007 (US); Université de Strasbourg, 67000 Strasbourg (FR)
(72) Inventeur: MOUSSA, Hassan, F-67400 Illkirch (FR); SIMON, Claude, F-67115 Plobsheim (FR); GUIDI, Alain, F-68230 Turckheim (FR); BARILLOT, Thibaud, F-67400 Illkirch (FR); EL HAFIDI, Idriss, F-67100 Strasbourg (FR)
(74) Mandataire: Robert, Vincent
(86) Numéro de dépôt international: PCT/EP2011/058375
(87) Numéro de publication internationale: WO 2011/157513

(56) Documents cités:
- DE-A1-102008 010 960
- DE-U1- 20 210 601
- JP-A- 62 182 710

## Description

### Domaine technique

La présente invention concerne un combiné d'instruments (tableau de bord) notamment pour véhicule automobile, plus particulièrement un tel combiné restituant les informations à afficher à l'utilisateur (notamment le conducteur) à partir d'une mémoire holographique.

### Etat de la technique

Les combinés d'instruments pour véhicules automobiles sont aujourd'hui principalement basés sur des combinaisons de systèmes mécaniques (p.ex. des cadrans avec des aiguilles actionnées par moteur ou des jauges), de voyants lumineux, et des afficheurs fluorescents ou à cristaux liquides. Un combiné d'instruments est typiquement utilisé pour l'affichage d'informations relatives au fonctionnement d'un véhicule automobile tels que, p.ex. la vitesse de déplacement, le nombre de tours moteur, le niveau de carburant de ce véhicule, le nombre de kilomètres parcourus, ainsi que diverses alarmes, alertes (pression d'huile, niveau de liquide de freinage, porte de véhicule ouverte, etc.) ou signalisations de fonctionnement (p.ex. feux de position, de croisement ou de route, frein à main serré, etc.)

Certaines voitures sont équipées en outre d'un dispositif d'affichage tête haute permettant d'afficher des informations en superposition sur l'environnement extérieur tel qu'il se présente du point de vue du conducteur. Un dispositif d'affichage tête haute comporte typiquement une unité de projection qui produit un faisceau lumineux destiné à être dirigé vers un combineur en vue de projeter une image, contenant notamment des informations en relation avec le fonctionnement ou la conduite du véhicule, dans le champ de vision du conducteur sous la forme d'une image virtuelle. De tels dispositifs étaient initialement réalisés sur base de technologies dérivées d'applications aéronautiques. Leurs coûts de fabrication étaient dès lors souvent importants, de nature à empêcher leur commercialisation et leur installation à plus rande échelle sur des véhicules de gamme basse ou moyenne.

Un combiné d'instrument comprenant les caractéristiques du préambule de la revendication 1 est connu du document DE 10 2008 010960 A1.

Il convient de noter que les dispositifs d'affichage tête haute connus aujourd'hui sont des unités d'affichage séparées du combiné d'instruments, malgré qu'ils soient intégrés en face du conducteur dans la plage avant des voitures et donc en proximité du combiné d'instruments. Par conséquent, l'effort (et donc les coûts) d'intégration d'un dispositif d'affichage tête haute aussi bien en phase de conception que de production est relativement élevé.

Un objectif de la présente invention est de pouvoir proposer un dispositif tête haute demandant un effort d'intégration moins élevé que les dispositifs tête haute selon l'état de la technique.

### Description générale de l'invention

L'invention atteint cet objectif d'abord par le fait de proposer un combiné d'instruments avec un dispositif d'affichage tête haute intégré ainsi que par le fait de reposer sur des techniques de diffraction optique permettant de générer des informations qui peuvent être affichées simultanément sur le combiné d'instruments et par le dispositif d'affichage tête haute. On appréciera que l'association de l'affichage sur le combiné d'instruments et de l'affichage tête haute permet une meilleure distribution, du point de vue ergonomique, des informations nécessaires à la sécurité de conduite.

Plus particulièrement, un combiné d'instruments, notamment pour véhicule automobile, selon l'invention, comprend un écran d'affichage (typiquement un écran translucide diffuseur) pour afficher des informations au conducteur du véhicule, une mémoire holographique contenant les informations stockées sous forme d'hologrammes, ainsi qu'une source de lumière pour générer un ou plusieurs faisceaux lumineux de lecture pour extraire les informations à afficher de la mémoire holographique et visualiser des informations extraites de la mémoire holographique sur l'écran d'affichage. Le dispositif d'affichage tête haute, intégré dans le combiné d'instruments, comprend un combineur qui projette des informations extraites de la mémoire holographique dans le champ de vision tête haute du conducteur. Les faisceaux de lecture éclairent donc les zones de la mémoire contenant les informations à afficher et les restituent d'une part sur l'écran d'affichage et d'autre part superposées à l'environnement extérieur tel qu'il se présente depuis le point de vue de l'utilisateur. L'écran d'affichage est de préférence conçu avec des propriétés optiques au niveau moléculaire permettant d'orienter le faisceau en provenance de la mémoire holographique avec une ouverture angulaire définie et un contraste optimisé.

Le combiné d'instruments comporte de préférence un séparateur de faisceaux, par exemple un miroir semi-réfléchissant, agencé dans le chemin optique entre la mémoire holographique et l'écran d'affichage pour séparer le ou les faisceaux lumineux générés par la source de lumière en un premier faisceau ou un premier groupe de faisceaux lumineux dirigés vers l'écran d'affichage et un deuxième faisceau ou un deuxième groupe de faisceaux dirigés vers le combineur du dispositif d'affichage tête haute. Les informations à afficher sont donc restituées sur l'écran d'affichage par le premier faisceau ou le premier groupe de faisceaux lumineux, et dans le champ de vision tête haute du conducteur par le deuxième faisceau ou le deuxième groupe de faisceaux dirigés vers le combineur.

Le séparateur de faisceaux comprend de préférence un miroir courbe (p. ex. parabolique) semi-réfléchissant pour ajuster la divergence du ou des faisceaux dirigés vers le combineur du dispositif d'affichage tête haute.

Avantageusement, la mémoire holographique comprend un support de stockage holographique monté mobile en translation et/ou en rotation sur un cadre et des moyens de positionnement (p.ex. un ou plusieurs moteurs de positionnement et la mécanique y afférente) pour amener et maintenir le support de stockage holographique dans une position choisie en fonction des informations devant être affichées. Les moyens de positionnement sont de préférence commandés par une unité de commande configurée pour recevoir en entrée les paramètres du véhicule (p.ex. via l'interface du véhicule) déterminer les informations à afficher au conducteur sur base de ces paramètres et commander les moyens de positionnement de sorte à ce que les zones de la mémoire holographique contenant les informations à afficher soient éclairées.

Selon un mode de réalisation avantageux de l'invention, la mémoire holographique comprend plusieurs supports de stockage holographique montés mobiles en translation et/ou en rotation sur un cadre et des moyens de positionnement pour amener et maintenir les supports de stockage holographique, l'un indépendamment de l'autre, dans une position respective choisie en fonction des informations devant être affichées. De cette façon, le nombre de combinaisons d'informations pouvant être affichées simultanément peut être considérablement augmenté.

Le ou les supports de stockage holographique sont de préférence en forme de disques, notamment montés mobiles en rotation sur le cadre au moyen d'un système de guidage sur le bord du ou des supports de stockage holographique en forme de disque. La zone centrale du ou des disques est dès lors disponible pour le stockage d'informations, contrairement au cas de disques logés sur un axe central.

Le ou les supports de stockage holographique comprennent une plaque en matériau plastique transparent (p. ex. en polycarbonate -PC-, en polyméthacrylate de méthyle -PMMA-, en polyéthylène téréphtalate - PET -) en surface de laquelle sont gravées les informations à afficher sous forme d'hologrammes. L'avantage principal de tels supports de stockage est leur faible coût par pièce, car ils se prêtent à la fabrication en masse par réplication d'un master. Les différentes informations destinées à être affichées peuvent être enregistrées soit par lithographie par interférence laser ou par génération numérique d'hologrammes adaptée à la production du master par technique de microfabrication.

Selon un mode de réalisation avantageux de l'invention, le combineur du dispositif d'affichage tête haute est escamotable dans le combiné d'instruments. L'utilisateur peut ainsi choisir s'il veut se faire afficher les informations uniquement sur le combiné d'instruments ou aussi via le dispositif d'affichage tête haute.

Le combineur peut être un miroir semi-réfléchissant ou un combineur diffractif, c.-à-d. comprenant un réseau de diffraction optique, agencé de sorte à dévier la lumière incidente dans le champ de vision de l'utilisateur..

Dans le cas d'un combineur diffractif, le dispositif d'affichage tête haute comprend de préférence un support diffuseur réfléchissant agencé de sorte à ce que les informations extraites de la mémoire holographique soient restituées sous forme d'image objet et qu'une image virtuelle de cette image objet apparaisse dans le champ de vision tête haute du conducteur. En d'autres mots, le ou les faisceaux lumineux restituent les informations à afficher sur le support diffuseur sous forme d'une image réelle des informations préalablement enregistrées. Le combineur dévie alors la lumière diffuse émanant du support diffuseur dans le champs de vision de l'utilisateur, créant ainsi l'illusion que la source de lumière diffuse se trouve dans le prolongement de l'axe allant des yeux de l'utilisateur au combineur.

Pour produire plusieurs faisceaux de lecture, on peut prévoir une pluralité de sources de lumière et/ou un ou plusieurs séparateurs de faisceaux agencés dans le chemin optique entre la source de lumière et la mémoire holographique, pour séparer le faisceau lumineux en provenance de la source de lumière en plusieurs faisceaux lumineux de lecture.

Le combiné d'instruments selon l'invention comprend de préférence des moyens de balayage pour déplacer dans la mémoire holographique le ou les spots (points éclairés) produits par le ou les faisceaux lumineux de lecture, en fonction des informations devant être affichées. Les moyens de balayage sont de préférence commandés par une unité de commande qui détermine la position des spots et donc les informations à afficher. Au cas où des moyens de balayage seraient utilisés conjointement avec des moyens de positionnement de la mémoire holographique, les deux sont de préférence commandés par l'unité de commande qui coordonne alors les différents mouvements possibles.

### Brève description des dessins

D'autres particularités et caractéristiques de l'invention ressortiront de la description détaillée de quelques modes de réalisation avantageux présentés ci-dessous, à titre d'illustration, avec référence aux dessins annexés. Ceux-ci montrent:
Fig. 1: une vue d'extérieur d'un combiné d'instruments avec un dispositif d'affichage tête haute intégré, selon un mode de réalisation préféré de l'invention ;
Fig. 2: une vue éclatée partielle du combiné d'instruments de la figure 1 ;
Fig. 3: une vue tridimensionnelle du multiplicateur de faisceaux montré à la figure 2;
Fig. 4: une vue tridimensionnelle de la mémoire holographique montrée à la figure 2;
Fig. 5 : une coupe schématique illustrant les chemins optiques dans le combiné d'instruments de la figure 1 ;
Fig. 6 une coupe schématique illustrant les chemins optiques dans un combiné d'instruments selon une variante du combiné d'instruments de la figure 1 ;
Fig. 7 une représentation schématique d'un agencement pour l'enregistrement d'informations sous forme d'hologrammes ;
Fig. 8 une vue schématique de face d'un disque de stockage holographique ;
Fig. 9 une vue d'extérieur d'un combiné d'instruments avec dispositif d'affichage tête haute intégré selon un autre mode de réalisation préféré de l'invention ;
Fig. 10 une illustration d'une première variante du combiné d'instruments de la figure 9 ;
Fig. 11 une illustration d'une deuxième variante du combiné d'instruments de la figure 9.

### Description d'une exécution préférée

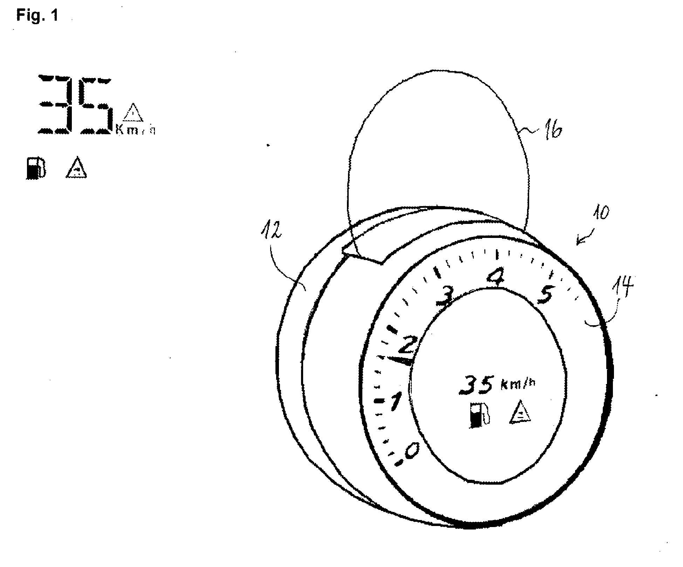

La figure 1 montre l'apparence extérieure d'un combiné d'instruments 10 avec un dispositif d'affichage tête haute intégré pour véhicule automobile. Le combiné d'instruments 10 comprend un boîtier 12, de forme généralement cylindrique, dans lequel sont intégrés les différents éléments permettant l'affichage d'informations relatives au fonctionnement d'un véhicule automobile. Sur le côté destiné à faire face au conducteur, le combiné d'instruments 10 comprend un écran d'affichage 14 en matériau translucide, diffuseur de lumière, sur lequel sont projetées les informations à afficher. Le combiné d'instruments 10 permet en outre d'afficher des informations en superposition à l'environnement extérieur par le dispositif d'affichage tête haute. Les informations destinées à l'affichage tête haute apparaissent dans le prolongement de l'axe allant des yeux du conducteur au combineur 16 du dispositif d'affichage tête haute intégré, créant l'illusion pour le conducteur que ces informations sont affichées à l'avant du pare-brise, à une certaine distance (p.ex. entre 1 et 5 m) des yeux du conducteur.

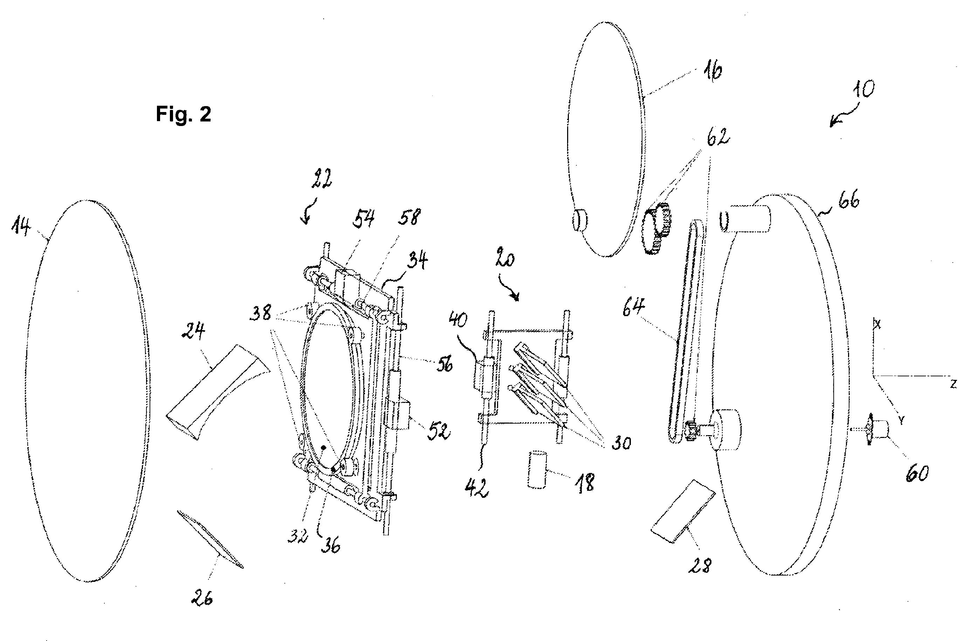

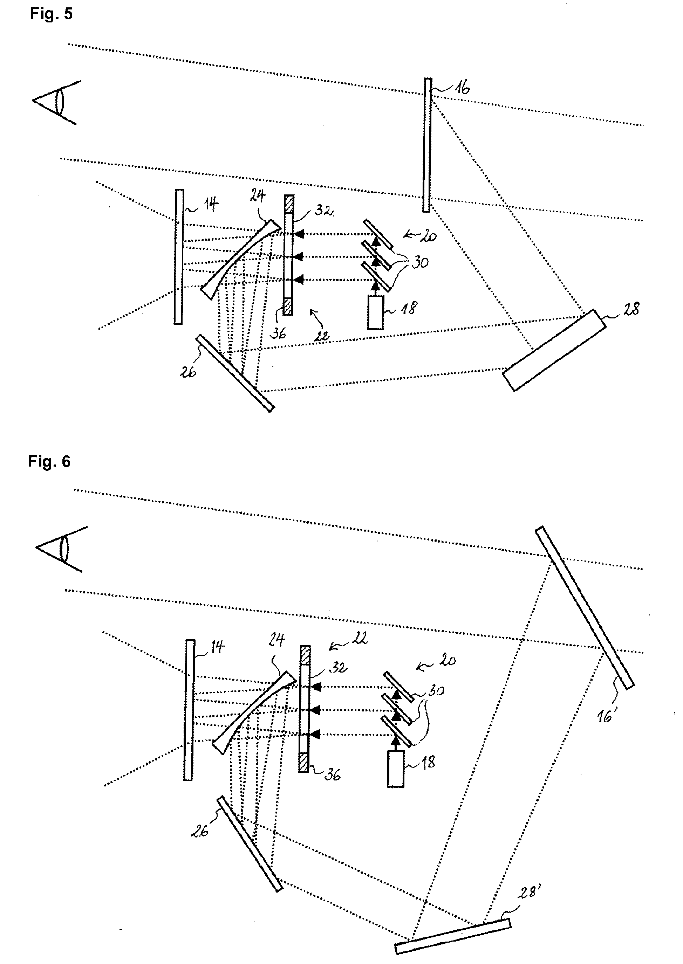

La figure 2 montre une vue éclatée partielle du combiné d'instruments de la figure 1. La figure 5 montre une coupe schématique longitudinale à travers le système de la figure 2. Outre l'écran d'affichage 14 et le combineur 16, le système optique comprend une source de lumière 18 (p.ex. un laser), un multiplicateur de faisceaux lumineux 20, une mémoire holographique 22, un séparateur de faisceaux 24, un miroir de déviation 26 et un support diffuseur 28.

La source de lumière 18 produit un faisceau lumineux, qui est séparé en plusieurs faisceaux de lecture par le multiplicateur de faisceaux lumineux 20. Celui-ci comprend un jeu de n miroirs 30 de réflectivité différente (dans l'exemple illustré, n = 3), conçus de manière à ce que les faisceaux divisés soient de puissance au moins approximativement égale à P/n où P désigne la puissance optique de la source. Dans l'exemple de la figure 2, le premier et le deuxième miroir 30 sur le chemin optique sont des miroirs semi-réfléchissants d'une réflectivité de 33% et de 50%, respectivement. Le troisième miroir 30 est un miroir de réflectivité proche de 100%. Le multiplicateur de faisceaux 20 renvoie donc n faisceaux de lecture vers différentes zones de la mémoire 22 et/ou sous différents angles pour lire les informations stockées sous forme d'hologrammes.

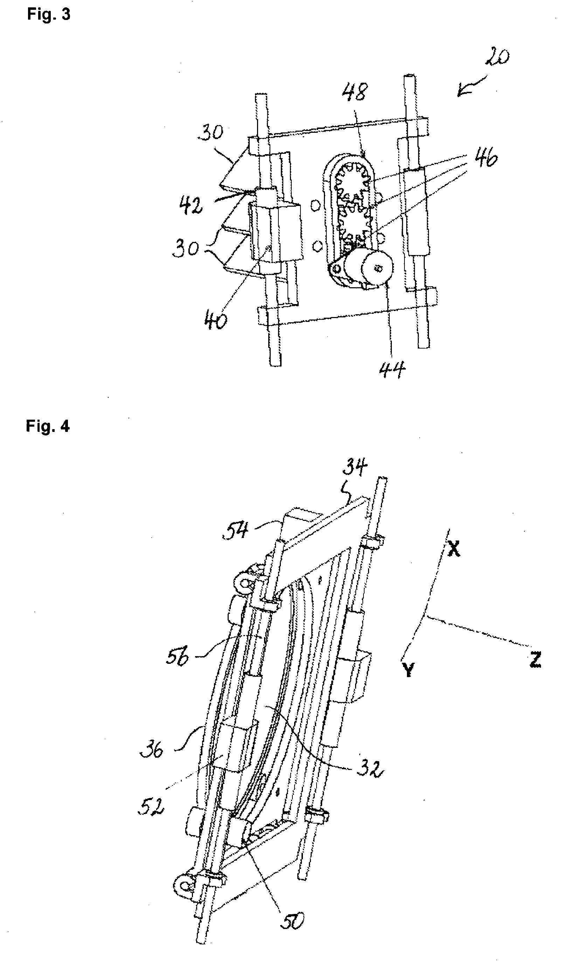

La figure 3 montre le côté arrière du multiplicateur de faisceaux 20. Les miroirs 30 sont montés mobiles en rotation et en translation grâce à un système de positionnement. Le système de positionnement et les miroirs forment ensemble un système de balayage pour déplacer dans la mémoire holographique 22 le ou les spots produits les n faisceaux lumineux de lecture. L'ensemble des miroirs 30 est porté sur une plaque de support qu'un moteur 40 permet d'entrainer en translation grâce à une vis sans fin 42. Les miroirs 30 sont entrainés en rotation par un ensemble d'un autre moteur 44, de roues dentées 46 et une courroie 48. Chaque miroir 30 peut ainsi être fait tourner autour d'un axe respectif substantiellement perpendiculaire au plan contenant le faisceau incident (en provenance de la source de lumière 18) et les faisceaux de lecture. Le système de positionnement du multiplicateur de faisceaux 20 permet ainsi de varier l'angle d'incidence et la position des faisceaux de lecture sur le disque de stockage holographique 32 de la mémoire 22, et par conséquent, de faire varier les informations extraites en fonction de l'angle d'incidence et des positions des spots. Le système de positionnement du multiplicateur de faisceaux 20 montré aux figures 1 et 3 préserve les angles entre les miroirs 30 et ne permet donc pas de contrôler l'angle d'incidence des n faisceaux de lumière de manière individuelle. Au cas où on voudrait réaliser cela, il conviendrait de prévoir un système de positionnement individuel pour chaque miroir 30.

Comme le montrent les figures 2 et 4, la mémoire holographique 22 comprend un disque de stockage holographique 32 (p. ex. en polycarbonate, en PMMA ou en PET) monté mobile en translation et en rotation sur un cadre 34 et un système mécanique de positionnement pour amener et maintenir le disque 32 dans une position choisie en fonction des informations devant être affichées. Le système mécanique de positionnement comprend une couronne dentée 36 fixée au bord du disque 32 et entrainée par des engrenages 38 couplés à un moteur 50 ce qui permet d'obtenir un mouvement de rotation du disque 32. La configuration choisie permet d'utiliser la totalité de la surface du disque 32 pour stocker les informations nécessaires car le guidage en rotation est réalisé sur le bord extérieur du disque contrairement aux systèmes qui sont entrainés en rotation par un moteur sur leur axe de rotation. Pour une lecture plus optimisée des informations encodées sur le disque 32, le mouvement de rotation est couplé à deux mouvements de translation selon les axes x et y. La combinaison d'une rotation avec deux translations permet de couvrir la totalité de surface de disque 32 de manière optimale. Chaque translation est effectuée par un moteur 52, respectivement 54, qui entraîne une vis sans fin 56, respectivement 58.

Les moyens de positionnement aussi bien du multiplicateur de faisceaux 20 que de la mémoire holographique sont commandés par une unité de commande (non illustrée) qui reçoit en entrée les paramètres du véhicule (p.ex. vitesse, niveau du carburant, etc.), en déduit les informations (images stockées) à afficher au conducteur de sorte à ce que les zones de la mémoire holographique contenant les informations à afficher soient éclairées chacune sous l'angle incidence approprié.

À la lecture depuis une mémoire holographique, l'éclairement par le faisceau de lecture se fait selon l'angle du faisceau « de référence » à l'enregistrement. Ceci conduit à une diffraction de la lumière qui reconstruit le faisceau « objet ». Après diffraction dans le disque de stockage holographique 32, les faisceaux de lecture sont « empreints » des informations à afficher. Les paramètres d'enregistrement des informations à afficher sont choisis de sorte à ce que les images stockées soient reconstruites en tant qu'images réelles sur l'écran d'affichage 14.

Après le passage par le disque de stockage holographique 32, le séparateur de faisceaux 24 divise les faisceaux de lecture en un premier groupe de faisceaux transmis venant frapper l'écran d'affichage 14 et un second groupe de faisceaux réfléchis vers le dispositif d'affichage tête haute. Le séparateur de faisceaux est réalisé sous forme d'un miroir semi-réfléchissant parabolique (de réflectivité p.ex. 50%) afin d'ajuster la divergence des faisceaux réfléchis et de minimiser l'encombrement. Le miroir de déviation 26 dévie les faisceaux réfléchis vers le support diffuseur 28, où est reconstruite une autre image réelle des informations stockées.

La lumière diffuse produite sur le support diffuseur 18 est déviée en direction du conducteur par le combineur diffractif 16 (qui est p. ex. réalisé en polycarbonate, en PMMA ou en PET), lorsque celui-ci est déployé. De préférence, le réseau de diffraction optique du combineur diffractif 16 réalise aussi une fonction d'agrandissement (de sorte à ajuster la taille de l'image virtuelle qui se présente au conducteur) et de positionnement de l'image virtuelle dans le champ vision du conducteur en respectant la scène réelle.

Le combineur 16 est escamotable à l'intérieur du boîtier 12 par un mécanisme comprenant un moteur 60, qui entraîne un train d'engrenages 62 et une courroie dentée 64. Ces éléments sont maintenus sur la plaque arrière 66 du boîtier 12. Le combineur est logé à pouvoir tourner autour d'un axe excentré, ce qui permet de le faire sortir ou rentrer selon le mode de fonctionnement choisi par le conducteur (c.-à-d. avec ou sans affichage tête haute). On appréciera que d'autres moyens puissent être mis en oeuvre pour sortir et rentrer le combineur 16. Par exemple, au lieu d'utiliser un système entraînant la rotation excentrée du combineur, on pourrait également prévoir un système configuré à sortir et rentrer le combineur par mouvement de translation.

La figure 6 montre une vue de coupe longitudinale à travers une variante du système de la figure 2. Le combiné d'instruments de la figure 6 se distingue de celui montré aux figures 2 et 5 par le fait que le support diffuseur 28 se trouve remplacé par un miroir de déviation 28' et qu'un combineur réflectif 16' est utilisé au lieu du combineur diffractif 16. Dans le cas de la figure 6, le combineur réflectif 16' est un miroir semi-réfléchissant plan (réflectivité autour de 60%). On pourrait toutefois utiliser un miroir semi-réfléchissant courbé, notamment pour régler la taille de l'image virtuelle affichée au conducteur ainsi que la distance à laquelle l'image virtuelle est située.

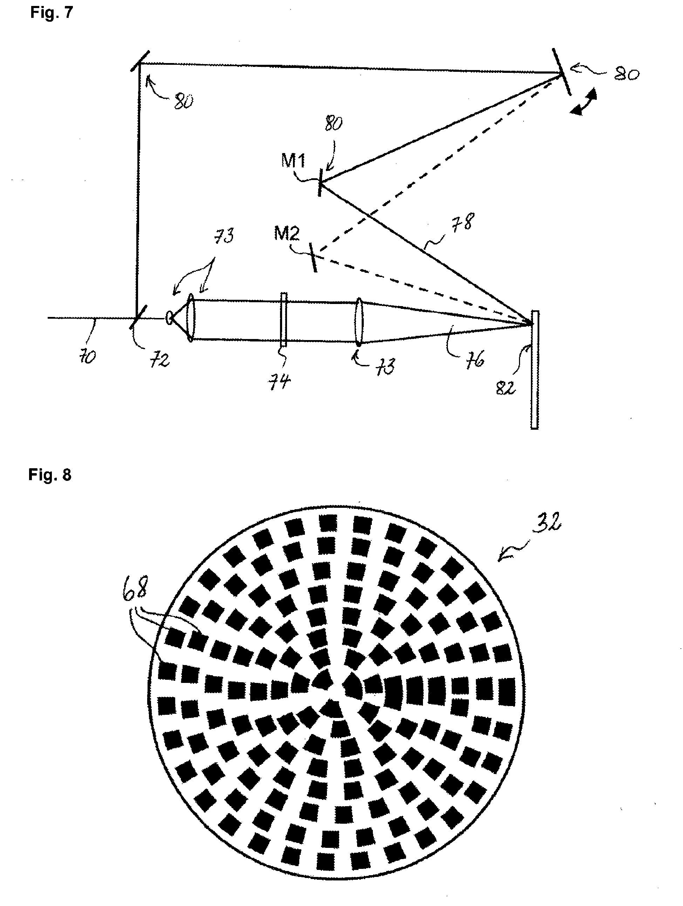

Le disque de stockage holographique 32 peut stocker des informations sous formes d'hologrammes d'images comprenant les informations. Un schéma de face du disque de stockage holographique 32 est montré à la figure 8. Les hologrammes 68 sont agencés en plusieurs cercles concentriques. Les zones mémoire couvrent presque la totalité de la surface du disque 32. L'entrainement mécanique du disque a été conçu de façon à pouvoir profiter de l'intégralité de cette surface pour le stockage d'informations. Toutes les informations susceptibles d'être affichées sont préenregistrées sur le disque 32 et lues en fonction des paramètres du véhicule ou d'autres circonstances demandant l'affichage de certaines informations au conducteur. On enregistre chaque image en tenant compte :
o de sa position sur le disque ;
o de l'orientation du disque au moment de la lecture et de l'affichage de l'image ;
o de la direction d'incidence du faisceau de lecture ;
o de la longueur d'onde du faisceau de lecture ;
o de la direction souhaitée du faisceau diffracté (et donc de la position de l'image sur les moyens d'affichage) ;
o de la divergence souhaitée du faisceau diffracté ;
o etc.

On notera que différents hologrammes peuvent être superposés dans une même zone de la mémoire holographique (hologrammes multiplexés), à condition que ces hologrammes correspondent à des directions d'incidence différentes du ou des faisceaux de lecture. Ainsi, dans une zone de mémoire donnée, chaque angle d'incidence correspond à une information d'affichage. Le multiplexage d'hologrammes permet le stockage d'un maximum d'information.

Les procédés envisagés pour réaliser le disque de stockage holographique comprennent l'holographie numérique et l'holographie analogique.

Dans un procédé d'holographie numérique, la structure diffractive, c.-à-d. l'hologramme, est calculée par ordinateur en fonction de l'image à afficher, des paramètres de lecture (p.ex. longueur d'onde du faisceau de lecture, angle d'incidence, taille du spot produit par le faisceau de lecture, etc.) et des paramètresd'affichage (p.ex. position et taille de l'image sur les moyens d'affichage, etc.) Le calcul se fait par exemple sur base de méthodes itératives, des algorithmes FDTD (de l'anglais : Finite Difference Time Domain - différences fines dans le domaine temporel), EMT (de l'anglais : Effective Medium Theory - théorie des milieux effectifs) ou autres. On obtient finalement un modèle numérique de la structure diffractive, qui est ensuite écrite par les techniques de micro-fabrication. De préférence, on réalise d'abord un master du disque de stockage holographique par photolithographie ou par lithographie par faisceau d'électrons, duquel master des copies sont ensuite tirées par un procédé de fabrication de masse. Le master est par exemple réalisé en un matériau comme le silicium ou le quartz et est ensuite utilisé pour engendrer le moule servant à la réplication en plastique.

Si la lithographie par interférence laser est choisie pour la réalisation de la mémoire holographique, on procède de préférence comme illustré à la figure 7. Un faisceau laser 70 est séparé en deux par un séparateur de faisceaux 72 (p.ex. un miroir semi-réfléchissant). Un des faisceaux ainsi obtenu est expansé, puis collimaté par un ensemble de lentilles 73. Le faisceau collimaté éclaire un écran à cristaux liquides transmissif 74, grâce auquel l'image à enregistrer est « chargée » dans le faisceau (donnant le faisceau objet 76). La position de l'image et sa taille sont choisies numériquement et l'écran à cristaux liquides 74 est commandé en conséquence. Le faisceau objet 76 traverse ensuite une lentille convergente pour ajuster la taille de l'hologramme (qui peut être inférieure à 1 mm²). L'autre faisceau (faisceau de référence 78) est dirigé vers sur une pluralité de miroirs 80 pour le superposer au faisceau objet 76 dans une couche de résine photosensible 82 étalée sur un support dur (p.ex. une plaque de verre). L'interférence des faisceaux objet 76 et de référence 78 donne l'hologramme qui est enregistré dans la couche photosensible 82.

L'ensemble d'enregistrement de la figure 7 est spécialement conçu pour enregistrer plusieurs hologrammes de manière consécutive. Le système permet de diriger le faisceau de référence sur la couche photosensible selon des directions d'incidence différentes. On peut ainsi multiplexer plusieurs hologrammes dans la même zone de la couche photosensible 82. A la lecture, on extrait les différentes informations individuellement en employant un faisceau de lecture arrivant sur le disque de stockage holographique sous le même angle d'incidence que celui qui était utilisé à l'enregistrement. La figure 7 montre que le faisceau de référence 78 est d'abord réfléchi par un miroir mobile en rotation, qui le dirige soit vers le miroir M1, soit vers le miroir M2. On enregistre un premier hologramme en faisant passer le faisceau de référence 78 sur le miroir M1. Ensuite, on change l'image produite sur l'écran à cristaux liquides 74 et on enregistre un autre hologramme en faisant passer le faisceau de référence 78 sur le miroir M2, sans bouger la plaque portant la couche photosensible 82. On peut répéter cette procédure pour d'autres angles d'incidence du faisceau de référence 78. Le nombre d'hologrammes pouvant être multiplexés au même endroit de la couche photosensible 82 dépend de la saturation du milieu photosensible.

La plaque portant la couche photosensible 82 est de préférence montée mobile en rotation (autour d'un axe perpendiculaire à la couche photosensible) et/ou en translation (dans le plan de la couche photosensible) pour permettre l'enregistrement d'hologrammes sur toute la surface de la couche photosensible.

Les faisceaux objet 76 et de référence 78 produisent des franges d'interférence dans la couche de résine photosensible 82 ce qui provoque une modulation dans l'espace de la solubilité de la résine. Les zones exposées de la résine photosensible deviennent ainsi plus ou moins solubles par rapport aux autres zones. Une gravure chimique permet ensuite la suppression des zones non insolées (ou insolées selon le type de la résine photosensible : négative ou positive) de manière à obtenir une structure diffractive de surface. La structure diffractive en relief est ensuite transférée à un moule pour la réplication en masse de copies en matière synthétique (p. ex. en polycarbonate, en PMMA ou en PVB) des hologrammes enregistrés.

Lors de la lecture, le faisceau de la lecture est dirigé sur une zone du disque contenant l'hologramme enregistré sous un angle α avec la normale du disque. L'image restituée sera alors celle qui a été enregistrée dans cette zone avec l'angle α. La direction de diffraction correspond à la direction du faisceau objet. La divergence du faisceau diffracté contenant l'image à afficher est déterminée par le choix de la focale de la lentille convergente utilisée pour la réduction de la section du faisceau objet.

Pour augmenter la densité des informations stockées dans la mémoire holographique, il est possible de superposer plusieurs disques de stockage holographiques. Ces disques peuvent être solidaires l'un de l'autre (p.ex. collés ensemble) ou mobiles l'un par rapport à l'autre. Dans le premier cas, un seul système de rotation et/ou de translation peut être utilisé pour l'ensemble des disques. Dans l'autre cas, des mécanismes de rotation et/ou de translation séparés pour les disques sont nécessaires. L'avantage d'avoir plusieurs disques indépendants est la flexibilité augmentée par rapport aux combinaisons d'informations pouvant être affichées.

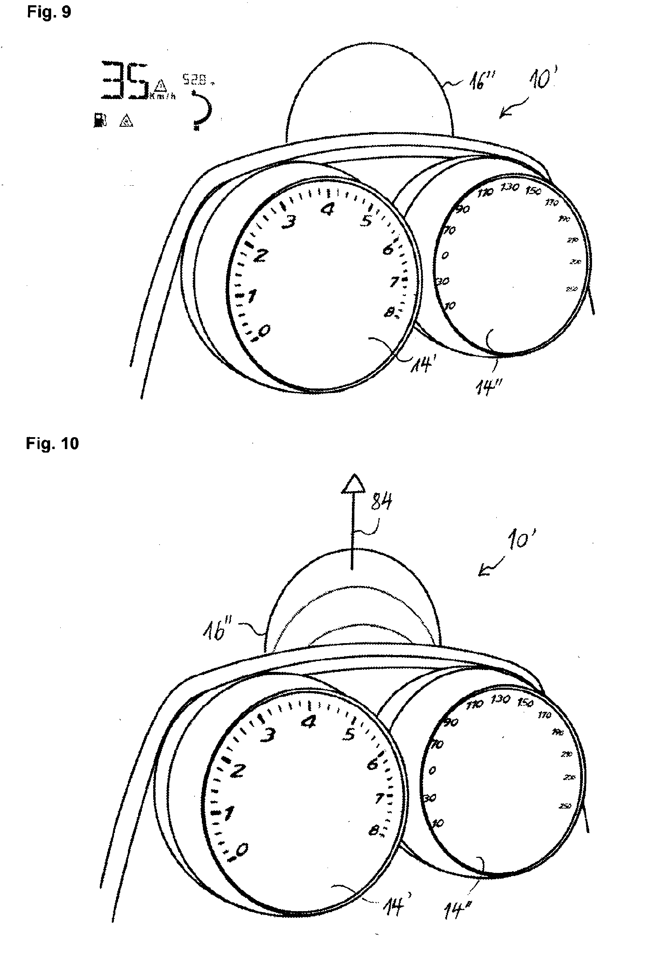

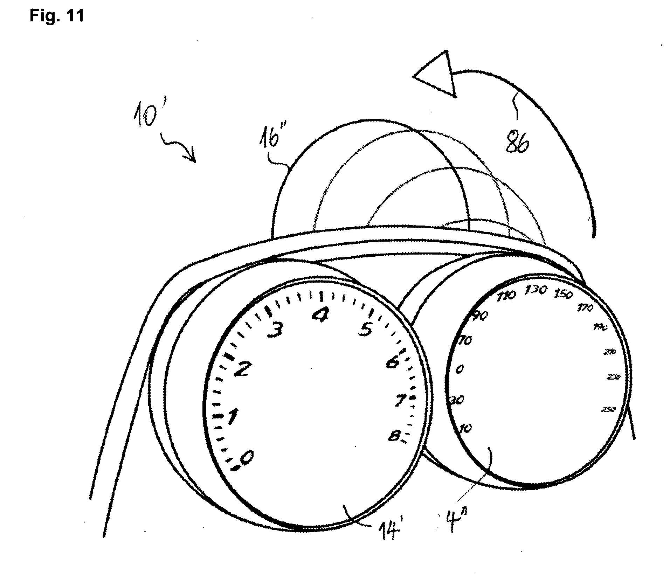

Un combiné d'instruments selon un autre mode de réalisation préféré de l'invention est montré aux figures 9 à 11. Le combiné d'instruments 10' comprend deux écrans d'affichage 14' et 14" et un dispositif d'affichage tête haute intégré. Le combineur 16" du combiné d'instruments 10' est réalisé escamotable. Selon la variante de la figure 10, le combineur 16" effectue un mouvement de translation (indiqué par la flèche 84) pour entrer ou sortir dans le boîtier du combiné d'instruments 10'. Selon la variante de la figure 10, le combineur 16" effectue un mouvement de rotation (indiqué par la flèche 86) pour entrer ou sortir dans le boîtier du combiné d'instruments 10'.

D'autres variantes de mécanismes d'escamotage sont possibles dans le contexte de l'invention. On pourrait par exemple faire sortir ou rentrer les combineurs 16, 16', 16" par un mouvement combiné de rotation et de translation, et/ou en les faisant basculer vers l'avant ou l'arrière.

## Revendications

1. Combiné d'instruments (10) pour véhicule automobile, comprenant
un écran d'affichage (14) pour afficher des informations au conducteur du véhicule;
une mémoire holographique (22) contenant les informations stockées sous forme d'hologrammes ;
une source de lumière (18) pour générer un ou plusieurs faisceaux lumineux de lecture pour extraire des informations à afficher de la mémoire holographique (22) et visualiser des informations extraites de la mémoire holographique (22) sur l'écran d'affichage (14) ;
un dispositif d'affichage tête haute comprenant un combineur (16) pour projeter des informations extraites de la mémoire holographique (22) dans le champ de vision tête haute du conducteur, **caractérisé en ce que** ledit dispositif d'affichage tête haute est intégré dans le combiné d'instruments (10).

2. Combiné d'instruments (10) selon la revendication 1, comprenant un séparateur de faisceaux (24) agencé dans le chemin optique entre la mémoire holographique (22) et l'écran d'affichage (14) pour séparer le ou les faisceaux lumineux générés par la source de lumière (18) en un premier faisceau ou un premier groupe de faisceaux lumineux dirigés vers l'écran d'affichage (14) et un deuxième faisceau ou un deuxième groupe de faisceaux dirigés vers le combineur (16) du dispositif d'affichage tête haute.

3. Combiné d'instruments (10) selon la revendication 2, le séparateur de faisceaux (24) comprenant un miroir courbé semi-réfléchissant pour ajuster la divergence du ou des faisceaux dirigés vers le combineur (16) du dispositif d'affichage tête haute.

4. Combiné d'instruments (10) selon l'une quelconque des revendications 1 à 3, dans lequel la mémoire holographique (22) comprend un support de stockage holographique (32) monté mobile en translation et/ou en rotation sur un cadre (34) et des moyens de positionnement (36, 38, 50, 52, 54, 56, 58) pour amener et maintenir le support de stockage holographique (32) dans une position choisie en fonction des informations devant être affichées.

5. Combiné d'instruments (10) selon l'une quelconque des revendications 1 à 3, dans lequel la mémoire holographique (22) comprend plusieurs supports de stockage holographique (32) montés mobiles en translation et/ou en rotation sur un cadre (34) et des moyens de positionnement (36, 38, 50, 52, 54, 56, 58) pour amener et maintenir les supports de stockage holographique (32), l'un indépendamment de l'autre, dans une position respective choisie en fonction des informations devant être affichées.

6. Combiné d'instruments (10) selon la revendication 4 ou 5, dans lequel le ou les supports de stockage holographique (32) sont en forme de disque.

7. Combiné d'instruments (10) selon la revendication 6, dans lequel le ou les supports de stockage holographique (32) sont montés mobiles en rotation sur ledit cadre (34) au moyen d'un système de guidage (38, 38) sur le bord du ou des supports de stockage holographique en forme de disque.

8. Combiné d'instruments (10) selon l'une quelconque des revendications 4 à 7, dans lequel le ou les supports de stockage holographique (32) comprennent une plaque en matériau plastique transparent en surface de laquelle sont gravées les informations à afficher sous forme d'hologrammes.

9. Combiné d'instruments (10) selon l'une quelconque des revendications 1 à 7, dans lequel le combineur (16) du dispositif d'affichage tête haute est escamotable dans le combiné d'instruments (10).

10. Combiné d'instruments (10) selon l'une quelconque des revendications 1 à 9, dans lequel le combineur (16) est un combineur diffractif.

11. Combiné d'instruments (10) selon la revendication 10, dans lequel le dispositif d'affichage tête haute comprend un support diffuseur (28) agencé de sorte à ce que les informations extraites de la mémoire holographique (22) soient restituées sous forme d'image objet sur le support diffuseur (28) et qu'une image virtuelle de cette image objet apparaisse dans le champ de vision tête haute du conducteur.

12. Combiné d'instruments (10) selon l'une quelconque des revendications 1 à 11, dans lequel le combineur (16) comprend un miroir semi-réfléchissant.

13. Combiné d'instruments (10) selon l'une quelconque des revendications 1 à 10, comprenant un ou plusieurs séparateur de faisceaux (30) agencé dans le chemin optique entre la source de lumière (18) et la mémoire holographique (22), pour séparer un faisceau lumineux en provenance de la source de lumière en plusieurs faisceaux lumineux de lecture.

14. Combiné d'instruments (10) selon l'une quelconque des revendications 1 à 13, comprenant des moyens de balayage (40, 42, 44, 46, 48) pour déplacer le ou les spots produits par le ou les faisceaux lumineux de lecture dans la mémoire holographique (22) en fonction des informations devant être affichées.

## Patentansprüche

1. Kombiinstrument (10) für Kraftfahrzeuge, enthaltend
einen Anzeigebildschirm (14), um dem Fahrer des Fahrzeugs Informationen anzuzeigen;
einen holografischen Speicher (22), der in Form von Hologrammen gespeicherte Informationen enthält;
eine Lichtquelle (18), um einen bzw. mehrere Leselichtstrahlen zu erzeugen, um aus dem holografischen Speicher (22) anzuzeigende Informationen auszulesen und aus dem holografischen Speicher (22) ausgelesene Informationen am Anzeigebildschirm (14) zu visualisieren;
eine Head-Up-Anzeigevorrichtung, die einen Kombinierer (16) aufweist, um aus dem holografischen Speicher (22) ausgelesene Informationen in das Head-Up-Sichtfeld des Fahrers zu projizieren,
**dadurch gekennzeichnet, dass** die Head-Up-Anzeigevorrichtung im Kombiinstrument (10) integriert ist.

2. Kombiinstrument (10) nach Anspruch 1, enthaltend einen Strahlteiler (24), der im optischen Weg zwischen dem holografischen Speicher (22) und dem Anzeigebildschirm (14) angeordnet ist, um den bzw. die von der Lichtquelle (18) erzeugten Lichtstrahlen in einen ersten Lichtstrahl bzw. eine erste Gruppe von Lichtstrahlen, die zum Anzeigebildschirm (14) gerichtet sind, und in einen zweiten Strahl bzw. eine zweite Gruppe von Strahlen aufzuteilen, die zum Kombinierer (16) der Head-Up-Anzeigevorrichtung gerichtet sind.

3. Kombiinstrument (10) nach Anspruch 2, wobei der Strahlteiler (24) einen teilreflektierenden, gekrümmten Spiegel enthält, um die Divergenz des bzw. der zum Kombinierer (16) der Head-Up-Anzeigevorrichtung gerichteten Strahlen abzustimmen.

4. Kombiinstrument (10) nach einem der Ansprüche 1 bis 3, wobei der holografische Speicher (22) ein holografisches Speichermedium (32) aufweist, das translatorisch verschiebbar und/oder verdrehbar an einem Rahmen (34) gelagert ist, sowie Positioniermittel (36, 38, 50, 52, 54, 58), um das holografische Speichermedium (32) in eine Position zu bringen und darin zu halten, die in Abhängigkeit von den Informationen gewählt ist, die angezeigt werden sollen.

5. Kombiinstrument (10) nach einem der Ansprüche 1 bis 3, wobei der holografische Speicher (22) mehrere holografische Speichermedien (32) aufweist, die translatorisch verschiebbar und/oder verdrehbar an einem Rahmen (34) gelagert sind, sowie Positioniermittel (36, 38, 50, 52, 54, 56, 58), um die holografischen Speichermedien (32) unabhängig voneinander in eine jeweilige Position zu bringen und darin zu halten, die in Abhängigkeit von den Informationen gewählt ist, die angezeigt werden sollen.

6. Kombiinstrument (10) nach Anspruch 4 oder 5, wobei das bzw. die holografischen Speichermedien (32) scheibenförmig ausgeführt sind.

7. Kombiinstrument (10) nach Anspruch 6, wobei das bzw. die holografischen Speichermedien (32) verdrehbar an dem Rahmen (34) gelagert sind, und zwar über ein Führungssystem (38, 38) am Rande des bzw. der scheibenförmigen, holografischen Speichermedien.

8. Kombiinstrument (10) nach einem der Ansprüche 4 bis 7, wobei das bzw. die holografischen Speichermedien (32) eine Platte aus transparentem Kunststoffmaterial aufweisen, an deren Oberfläche die in Form von Hologrammen anzuzeigenden Informationen eingeätzt sind.

9. Kombiinstrument (10) nach einem der Ansprüche 1 bis 7, wobei der Kombinierer (16) der Head-Up-Anzeigevorrichtung in das Kombiinstrument (10) versenkbar ist.

10. Kombiinstrument (10) nach einem der Ansprüche 1 bis 9, wobei der Kombinierer (16) ein diffraktiver Kombinierer ist.

11. Kombiinstrument (10) nach Anspruch 10, wobei die Head-Up-Anzeigevorrichtung eine Diffusorhalterung (28) aufweist, die so angeordnet ist, dass die aus dem holografischen Speicher (22) ausgelesenen Informationen in Form von Objektbildern auf der Diffusorhalterung (28) wiedergegeben werden und dass ein virtuelles Bild dieses Objektbildes im Head-Up-Sichtfeld des Fahrers erscheint.

12. Kombiinstrument (10) nach einem der Ansprüche 1 bis 11, wobei der Kombinierer (16) einen teilreflektierenden Spiegel aufweist.

13. Kombiinstrument (10) nach einem der Ansprüche 1 bis 10, enthaltend einen bzw. mehrere Strahlteiler (30), der bzw. die im optischen Weg zwischen der Lichtquelle (18) und dem holografischen Speicher (22) angeordnet ist bzw. sind, um einen von der Lichtquelle stammenden Lichtstrahl in mehrere Leselichtstrahlen aufzuteilen.

14. Kombiinstrument (10) nach einem der Ansprüche 1 bis 13, enthaltend Abtastmittel (40, 42, 44, 46, 48) zum Verlagern des bzw. der von dem bzw. den Leselichtstrahl(en) erzeugten Spot/Spots in dem holografischen Speicher (22) in Abhängigkeit von den Informationen, die angezeigt werden sollen.

## Claims

1. Instrument cluster (10) for motor vehicle, comprising a display screen (14) to display information to the driver of the vehicle;
a holographic memory (22) containing the information stored in the form of holograms;
a light source (18) to generate one or more reading light beams to extract information to be displayed from the holographic memory (22) and display information extracted from the holographic memory (22) on the display screen (14);
a head-up display device comprising a combiner (16) to project information extracted from the holographic memory (22) into the head-up field of view of the driver, **characterised by** the fact that the said head-up display device is integrated in the instrument cluster (10).

2. Instrument cluster (10) as described in claim 1, comprising a beam separator (24) arranged in the optical path between the holographic memory (22) and the display screen (14) to separate the light beam or light beams generated by the light source (18) into a first beam or a first group of light beams directed towards the display screen (14) and a second beam or a second group of beams directed towards the combiner (16) of the head-up display device.

3. Instrument cluster (10) as described in claim 2, the beam separator (24) comprising a curved semi-reflecting mirror to adjust the divergence of the beam or of the beams directed towards the combiner (16) of the head-up display device.

4. Instrument cluster (10) as described in any one of claims 1 to 3, in which the holographic memory (22) comprises a holographic storage support (32) mounted movably in translation and/or in rotation on a frame (34) and positioning means (36, 38, 50, 52, 54, 56, 58) to bring the holographic storage support (32) into and maintain it in a position selected depending on the information having to be displayed.

5. Instrument cluster (10) as described in any one of claims 1 to 3, in which the holographic memory (22) comprises a plurality of holographic storage supports (32) mounted movably in translation and/or in rotation on a frame (34) and positioning means (36, 38, 50, 52, 54, 56, 58) to bring the holographic storage supports (32) into and maintain them in, one independently of the other, a respective position selected depending on the information having to be displayed.

6. Instrument cluster (10) as described in claim 4 or 5, in which the holographic storage support or supports (32) are in disc form.

7. Instrument cluster (10) as described in claim 6, in which the holographic storage support or supports (32) are mounted movably in rotation on the said frame (34) by means of a guiding system (38, 38) on the edge of the holographic storage support or supports in disc form.

8. Instrument cluster (10) as described in any one of claims 4 to 7, in which the holographic storage support or supports (32) comprise a plate made of transparent plastics material on the surface of which is engraved the information to be displayed in the form of holograms.

9. Instrument cluster (10) as described in any one of claims 1 to 7, in which the combiner (16) of the head-up display device is retractable into the instrument cluster (10).

10. Instrument cluster (10) as described in any one of claims 1 to 9, in which the combiner (16) is a diffractive combiner.

11. Instrument cluster (10) as described in claim 10, in which the head-up display device comprises a diffuser support (28) so arranged that the information extracted from the holographic memory (22) is restored in the form of an object image on the diffuser support (28) and that a virtual image of this object image appears in the head-up field of view of the driver.

12. Instrument cluster (10) as described in any one of claims 1 to 11, in which the combiner (16) comprises a semi-reflecting mirror.

13. Instrument cluster (10) as described in any one of claims 1 to 10, comprising one or more beam separator (30) arranged in the optical path between the light source (18) and the holographic memory (22), to separate a light beam emanating from the light source into a plurality of reading light beams.

14. Instrument cluster (10) as described in any one of claims 1 to 13, comprising scanning means (40, 42, 44, 46, 48) to displace the spot or spots produced by the reading light beam or beams in the holographic memory (22) depending on the information having to be displayed.
